Europäisches Patentamt

(19) European Patent Office

Office européen des brevets

(11) Numéro de publication: **0 143 069**
**B1**

(12) **FASCICULE DE BREVET EUROPÉEN**

(45) Date de publication du fascicule du brevet:
**18.05.88**

(51) Int. Cl.⁴: **B 62 B 15/00**

(21) Numéro de dépôt: **84460010.6**

(22) Date de dépôt: **22.11.84**

(30) Priorité: **24.11.83 FR 8318898**

(43) Date de publication de la demande:
**29.05.85 Bulletin 85/22**

(45) Mention de la délivrance du brevet:
**18.05.88 Bulletin 88/20**

(84) Etats contractants désignés:
**BE DE GB NL**

(56) Documents cité:
**CH-A-109 905**
**DE-A-2 738 141**
**DE-A-2 823 499**
**DE-A-3 014 665**
**FR-A-2 529 525**
**US-A-3 986 722**

(54) Engin à voile à deux roues, ou deux patins, ou deux skis.

(73) Titulaire: **Godot, Thierry, Goasmeur Plougonvelin, F-29217 Le Conquet (FR)**

(72) Inventeur: **Godot, Thierry, Goasmeur Plougonvelin, F-29217 Le Conquet (FR)**

EP 0 143 069 B1

LIBER, STOCKHOLM 1988

## Description

La présente invention concerne un engin à voile mû par le vent et qui roule sur deux roues ou glisse sur deux patins ou skis. Cet engin est piloté par une personne se tenant debout approximativement de la même manière que sur une planche à voile. L'engin est équipé d'un gréement type planche à voile légèrement modifié pour s'adapter aux nouvelles contraintes mécaniques. Il comporte donc deux roues pour la version qui roule dont l'une directrice est montée trainée dans une chape pivotante à l'avant du châssis de l'engin, l'autre est fixe à l'arrière de ce même châssis. Le mât du gréement est articulé d'avant en arrière par exemple dans le plan vertical de symétrie de l'engin autour d'un axe de rotation placé sur une embase sur laquelle vient s'emboîter le mât qui peut tourner sur lui-même. Il permet de diriger l'engin: Lorsque l'on met le mât vers l'avant, l'engin abat et lorsque l'on met le mât vers l'arrière, il lofe. La roue avant étant traînée dans sa chape support, on remarque de plus qu'en cas de dévente l'engin se met à lofer sous l'effet du poids du pilote ce qui tend à redresser l'engin et évite la chute. Pour abattre, le pilote peut avancer le mât vers l'avant pour déplacer le centre de poussée de la voile vers la roue directrice et de plus incliner légèrement l'engin sous le vent. Pour lofer, il peut incliner le mât vers l'arrière et de plus incliner légèrement l'engin au vent.

On constate grâce à la combinaison de ces deux possibilités de pilotage que l'engin reste manoeuvrant au près très serré ou au vent arrière tout en conservant des réactions très saines à toutes les allures. Dans toutes ces manoeuvres la roue, patin ou ski avant suit parfaitement les impulsions du pilote du fait de la liberté angulaire de la chape pivotante.

Cet engin offre une plus grande sécurité d'utilisation que les engins à voile connus jusqu'à présent du fait de sa manoeuvrabilité dans toutes les configurations de circulation accessibles à son gréement et du fait de son temps de réponse très bref en cas de nécessité de changement de direction. Plusieurs engins connus cités dans le rapport de recherche européenne manquent précisément de cas deux qualités fondamentales.

Deux de ces engins qui ont été décrits illustrent bien l'état de la technique mais aussi le manque de sécurité ou de manoeuvrabilité inhérent à leur géométries. Le premier, americain (brevet US -A- 3 956 722), décrit une "bicyclette à voile" dont le gréement est fixé rigidement sur l'avant du châssis. Cet engin ne peut cacher son pilotage au guidon difficile en combinaison avec un maintien ferme du gréement.

Le deuxième, allemand (demande de brevet DE-A-3 014 665), décrit un engin exclusivement réservé à la glace et à des vents réguliers de travers (largue) qui comporte un gréement articulé à sa base sur un châssis équipé de deux ensembles de patins. L'ensemble de patins avant non muni de carres autorise un glissement latéral de l'avant de l'engin et permet de le diriger sous réserve d'évoluer au largue sur une glace lisse et par des vents bien établis. En outre ce dernier engin est non manoeuvrant au vent arrière, au près serré ou dans toutes les configurations de déventes, ce qui est dangereux.

Les éléments mécaniques tels que roues supportées par un châssis et mât articulé compris dans les documents précédents, correspondent au préambule de la revendication 1.

L'engin selon la présente invention est caratérisé par la partie caractérisante de la revendication 1.

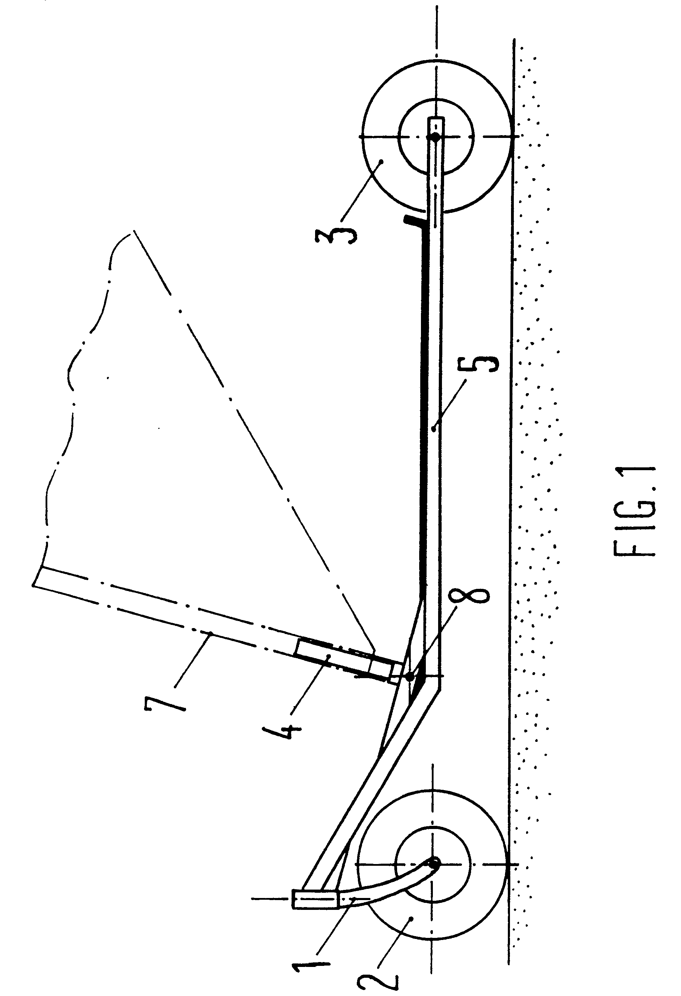

La description qui va suivre illustrée par les figures 1, 2 et 3 permettra de bien comprendre le fonctionnement de la présente invention et donne un exemple de géométrie à donner à deux représentants de la famille d'engins ainsi créée.

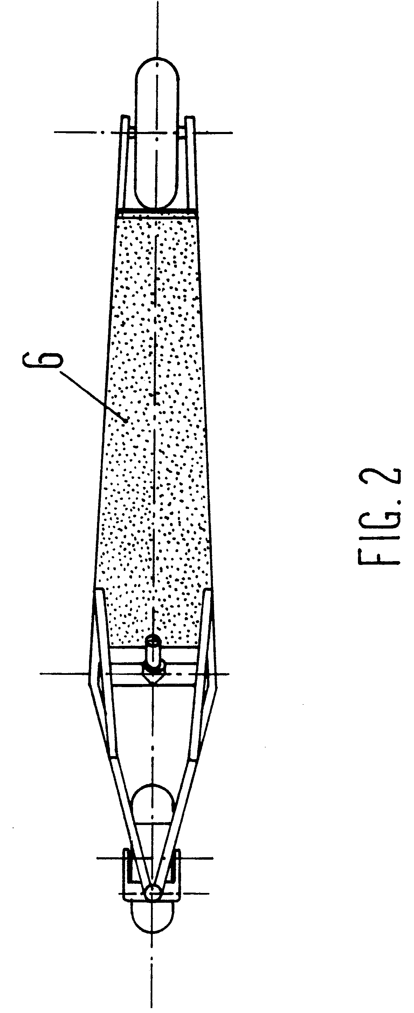

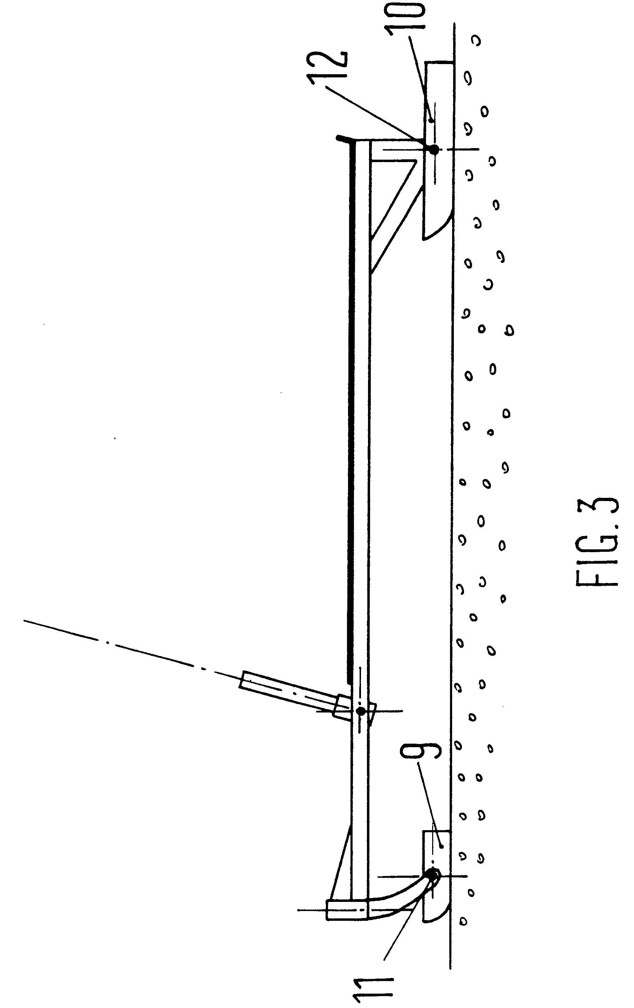

La figure 1 est une vue de côté de l'engin à deux roues. La figure 2 est une vue de dessus de la figure 1. La figure 3 est la vue de côté de l'engin à skis ou à patins.

Sur la figure 1 les repères 2 et 3 schématisent les roues. La roue rep. 2 est montée tranlée dans une chape rep. 1. En effet l'axe de la chape se trouve en avant du point de contact de la roue avec le sol. Le repère 4 est l'embase sur laquelle vient s'emboîter le mât rep. 7. Elle est articulée autour d'un axe de rotation rep. 8 horizontal qui lui permet de se déplacer dans le plan vertical ou sensiblement vertical de symétrie de l'engin. Le mât rep. 7 peut tourner sur lui-même par rapport a l'embase rep. 4. Le repère 5 est un châssis supportant le pilote. Il est dessiné en treillis tubulaire mais peut aussi être construit sous forme d'une coque rigide. Dans la figure 2 le repère 6 est un plancher qui n'existera pas dans la version avec rep. 5 sous forme de coque rigide.

La figure 3 montre 1 engin équipé de skis ou patins rep. 9 et 10. Les repères 9 et 10 sont articulés sur deux axes rep. 11 et 12. Il est certain que l'engin doit être plus robuste mécaniquement pour une utilisation en course ou vitesse que pour une utilisation touristique ou de loisir.

## Revendications

1. Engin à voile destiné à se déplacer sur surfaces fermes muni de deux ensembles de déplacement comportant un seul moyen (roue, patin ou ski) à l'avant et un seul moyen (roue, patin ou ski) à l'arrière situés dans le plan vertical de symétrie de l'engin, ces deux ensembles étant reliés par un châssis (5) supportant à l'avant un gréement de type planche à voile par l'intermédiaire d'un mât (7) emboîté sur une embase (4) articulée à sa base et ne pouvant se déplacer que dans le plan vertical de symétrie de l'engin ou sensiblement vertical, caractérisé en ce que le moyen de déplacement avant est monté dans une chape pivotante (1) articulée sous le châssis (5) et dont l'axe (de la chape) se trouve dans le plan vertical de symétrie de l'engin et en avant du centre de la surface de contact du moyen (roue, patin ou ski) avec les surfaces parcourues (moyen traîné dans la chape).

2. Engin selon la revendication précédente caractérisé en ce que l'emboîtement du mât (7) sur l'embase (4) permet une rotation sur lui-même de ce mât.

3. Engin selon l'une quelconque des revendications précédentes caractérisé en ce que le châssis (5) supporte un plancher (6) destiné à porter le pilote.

4. Engin selon l'une quelconque des revendications précédentes caractérisé en ce que les deux moyens de déplacement sont des roues.

5. Engin selon l'une quelconque des revendications 1 à 3 caractérisé en ce que les deux moyens sont des skis.

6. Engin selon l'une quelconque des revendications 1 à 3 caractérisé en ce que les deux moyens sont des patins.

7. Engin selon l'une quelconque des revendications 1, 2, 3, 5, 6 caractérisé en ce que les deux moyens de déplacement (9) et (10) sont articulés sur deux axes (11) et (12) horizontaux.

**Patentansprüche**

1. Segelfahrzeug zur Fortbewegung auf festem Land mit zwei in der vertikalen Symmetrieachse des Fahrzeugs angebrachten und durch einen Rahmen (5) verbundenen Bodenauflager, die vorne und hinten jeweils ein einziges Fahrelement enthalten (Rad, Kufe oder Ski). Im vorderen Teil des Rahmens ist ein gelenkiger Sockel (4) angebracht, auf den der nur in der vertikalen Längsachse (bzw. auch mehr oder weniger vertikal) schwenkbare Mast (7) aufgesetzt wird. An dem Mast ist ein Rigg vom Typ "Windsurfer" angebracht. Dieses Segelfahrzeug ist dadurch gekennzeichnet, daß das vordere Fahrelement mit Hilfe eines frei drehbaren Lenkkopfes (1) unter dem Rahmen (5) angebracht ist und dadurch, daß der Lenkkopf symmetrisch zur vertikalen Längsachse des Fahrzeugs vor dem Zentrum der Berührungsfläche des Fahrelements (Rad, Kufe, Ski) mit der befahrenen Oberfläche angeordnet ist (vorderes Fahrelement als frei lenkender Nachläufer ausgebildet).

2. Segelfahrzeug nach Anspruch 1, dadurch gekennzeichnet, daß das Aufsetzen des Mastes (7) auf den Sockel (4) eine Drehung des Mastes um die eigene Achse ermöglicht.

3. Segelfahrzeug nach einem oder mehreren der Ansprüche 1, 2, dadurch gekennzeichnet, daß der Rahmen (5) die Anordnung einer Standfläche (6) für den Segler zuläßt.

4. Segelfahrzeug nach einem oder mehreren der Ansprüche 1, 2, 3, dadurch gekennzeichnet, daß die beiden Fahrelements Räder sind.

5. Segelfahrzeug nach einem oder mehreren der Ansprüche 1, 2, 3, dadurch gekennzeichnet, daß die beiden Fahrelements Skier sind.

6. Segelfahrzeug nach einem oder mehreren der Ansprüche 1, 2, 3, dadurch gekennzeichnet, daß die beiden Fahrelements Kufen sind.

7. Segelfahrzeug nach einem oder mehreren der Ansprüche 1, 2, 3, 5, 6, dadurch gekennzeichnet, daß die beiden Fahrelements (9), (10) um zwei horizontale Achsen (11), (12) schwenkbar sind.

**Claims**

1. Sailing craft designed to be used on hard surfaces and equipped with two mobile units which include one means of mobility (wheel, runner or ski) at the front and one means of mobility (wheel, runner or ski) at the rear, fixed in the vertical symetrical plane of the craft. These two units are linked by a chassis (5) with a windsurfer type rigging by means of a mast (7) fixed on a support (4) articulated at the base and which can only be mobilized in the symetrically vertical or slightly vertical plane. The craft is caracterized by the fact that the means of mobility at the front is fixed in a revolving case (1) articulated under the chassis (5) and by the fact that the case's axle is in the symetrical vertical plane of the craft and in front of the centre of the surface contact of the means of mobility (wheel, runner or ski) whith the ground surface (means being pulled in the case).

2. Sailing craft according to the claims stated above, characterized by the fact that the fixing of the mast (7) on the support (4) allows a complete rotary movement.

3. Sailing craft according to the claims stated above, characterized by the fact that there is a board (8) on the chassis (5) designed to carry the sailor.

4. Sailing craft according to the claims stated above, characterized by the fact that the two means of mobility are wheels.

5. Sailing craft according to the claims 1, 2, 3 stated above, characterized by the fact that the two means of mobility are skis.

6. Sailing craft according to the claims 1, 2, 3 stated above, characterized by the fact that the two means of mobility are runners.

7. Sailing craft according to the claims 1, 2, 3, 5, 6 stated above, characterized by the fact that the two means of mobility (9) and (10) are articulated on two horizontal axles (11) and (12).

FIG.1

FIG. 2

0 143 069

FIG.3